# EUROPEAN PATENT APPLICATION

(11) **EP 4 280 053 A1**
(43) Date of publication of application: **22.11.2023**
(21) Application number: 23173476.5
(22) Date of filing: 15.05.2023
(51) Int. Cl.: G06F 8/65, G06F 21/64

(54) **METHOD AND SYSTEM FOR UPGRADING FIRMWARE OF VEHICLE INFOTAINMENT SYSTEM**

(30) Priority: 17.05.2022 CN 202210533470
(71) Applicant: Nio Technology (Anhui) Co., Ltd, Hefei City, Anhui 230601 (CN)
(72) Inventor: ZHAO, Hao, Hefei City, Anhui 230601 (CN)
(74) Representative: Vossius & Partner Patentanwälte Rechtsanwälte mbB

(57) **Abstract**

The disclosure relates to a method for upgrading firmware of a vehicle infotainment system, a computer-readable storage medium, a mobile terminal, and a vehicle infotainment system. The method for upgrading firmware of a vehicle infotainment system includes the following steps performed by a mobile terminal: receiving a firmware package from a server; performing first security check and first integrity check on the firmware package; if the firmware package passes the first security check and the first integrity check, decompressing the firmware package to obtain a firmware data packet, where the firmware data packet includes a plurality of submodules; performing packing and signing on the plurality of submodules to generate a firmware upgrade package; and sending the firmware upgrade package to a vehicle infotainment system for upgrading.

## Description

### Technical Field

The disclosure relates to a vehicle infotainment system of a vehicle, and specifically, to upgrading firmware of a vehicle infotainment system.

### Background Art

Currently, vehicles as a transportation means increasingly present a characteristic of intelligent terminals. Vehicle infotainment systems of the vehicles are one of input interface devices for the vehicles as the intelligent terminals, and generally all support firmware over-the-air (FOTA). With the FOTA, the vehicle infotainment systems may be updated and upgraded to the latest version. However, there are still some problems when the FOTA technology is directly used to upgrade the vehicle infotainment systems. The problems include an efficiency problem, where it takes much time and consumes traffic flow for the vehicle infotainment systems to download an upgrade package via a cellular network, and a security problem, where there are risks such as network hijacking and hacker attack in an upgrading process.

In view of this, an improved firmware over-the-air mechanism is needed.

### Summary

Embodiments of the disclosure provide a method and system for upgrading firmware of a vehicle infotainment system, a computer-readable storage medium, a mobile terminal, and a vehicle infotainment system, to upgrade firmware of the vehicle infotainment system.

According to an aspect of the disclosure, a method for upgrading firmware of a vehicle infotainment system is provided. The method includes the following steps performed by a mobile terminal: receiving a firmware package from a server; performing first security check and first integrity check on the firmware package; if the firmware package passes the first security check and the first integrity check, decompressing the firmware package to obtain a firmware data packet, where the firmware data packet includes a plurality of submodules; performing packing and signing on the plurality of submodules to generate a firmware upgrade package; and sending the firmware upgrade package to a vehicle infotainment system for upgrading.

In some embodiments of the disclosure, optionally, the method further includes: performing second security check and second integrity check on each of the plurality of submodules, where if the plurality of submodules pass the second security check and the second integrity check, packing and signing are performed on the plurality of submodules to generate the firmware upgrade package.

In some embodiments of the disclosure, optionally, the method further includes: determining, by the mobile terminal, a state of the mobile terminal; and if the state of the mobile terminal satisfies a predetermined state, sending, to the server, a request to receive the firmware package.

In some embodiments of the disclosure, optionally, the predetermined state includes at least one of the following: the mobile terminal is in an idle state, the mobile terminal is located in coverage of a wireless local area network, and a battery level of the mobile terminal is greater than a predetermined value.

In some embodiments of the disclosure, optionally, the first security check and the second security check are performed in a security chip of the mobile terminal.

In some embodiments of the disclosure, optionally, the security chip is a trusted execution environment TEE chip or a secure element SE chip.

In some embodiments of the disclosure, optionally, the first security check and the second security check are performed based on a public key received from the server.

In some embodiments of the disclosure, optionally, the first integrity check and the second integrity check are performed based on a hash value.

In some embodiments of the disclosure, optionally, the signing is performed by using a security chip of the mobile terminal based on a built-in private key certificate, and the private key certificate is sent to the vehicle infotainment system.

In some embodiments of the disclosure, optionally, the method further includes the following steps performed by the vehicle infotainment system: receiving the firmware upgrade package; performing signature check on the firmware upgrade package based on the private key certificate; performing unpacking on the checked firmware upgrade package to obtain an upgrade file; and upgrading firmware of the vehicle infotainment system based on the upgrade file.

According to another aspect of the disclosure, a computer-readable storage medium having instructions stored therein is provided. The instructions, when executed by a processor, cause the processor to perform any one of the methods described above.

According to another aspect of the disclosure, a mobile terminal is provided. The mobile terminal includes: a memory configured to: store instructions; and a processor configured to: execute the instructions to perform the following operations: receiving a firmware package from a server; performing first security check and first integrity check on the firmware package; if the firmware package passes the first security check and the first integrity check, decompressing the firmware package to obtain a firmware data packet, where the firmware data packet includes a plurality of submodules; performing packing and signing on the plurality of submodules to generate a firmware upgrade package; and sending the firmware upgrade package to a vehicle infotainment system for upgrading.

According to another aspect of the disclosure, a vehicle infotainment system is provided. The vehicle infotainment system includes: a memory configured to: store instructions; and a processor configured to: execute the instructions to perform the following operations: receiving a firmware upgrade package from a mobile terminal; performing signature check on the firmware upgrade package based on a private key certificate received from the mobile terminal; performing unpacking on the checked firmware upgrade package to obtain an upgrade file; and upgrading firmware of the vehicle infotainment system based on the upgrade file.

According to the method for upgrading firmware of a vehicle infotainment system, the computer-readable storage medium, the mobile terminal, and the vehicle infotainment system provided in some embodiments of the disclosure, idle resources (including a processing capability and a network capability) of the mobile terminal of a user may be used, so that resource overheads of a vehicle infotainment system in upgrade file receiving and processing processes can be reduced.

### Brief Description of the Drawings

The above and other objectives and advantages of the disclosure will be more thorough and clearer from the following detailed description in conjunction with the drawings, where the same or similar elements are represented by the same reference numerals.
FIG. 1 shows a method for upgrading firmware of a vehicle infotainment system according to an embodiment of the disclosure.
FIG. 2 shows a system for upgrading firmware of a vehicle infotainment system according to an embodiment of the disclosure.

### Detailed Description of Embodiments

For brevity and illustrative purposes, the principles of the disclosure are mainly described herein with reference to its exemplary embodiments. However, those skilled in the art can easily appreciate that the same principle can be equivalently applied to all types of methods for upgrading firmware of a vehicle infotainment system, computer-readable storage mediums, mobile terminals, and vehicle infotainment systems, and a same or similar principle can be implemented therein. These variations do not depart from the true spirit and scope of the disclosure.

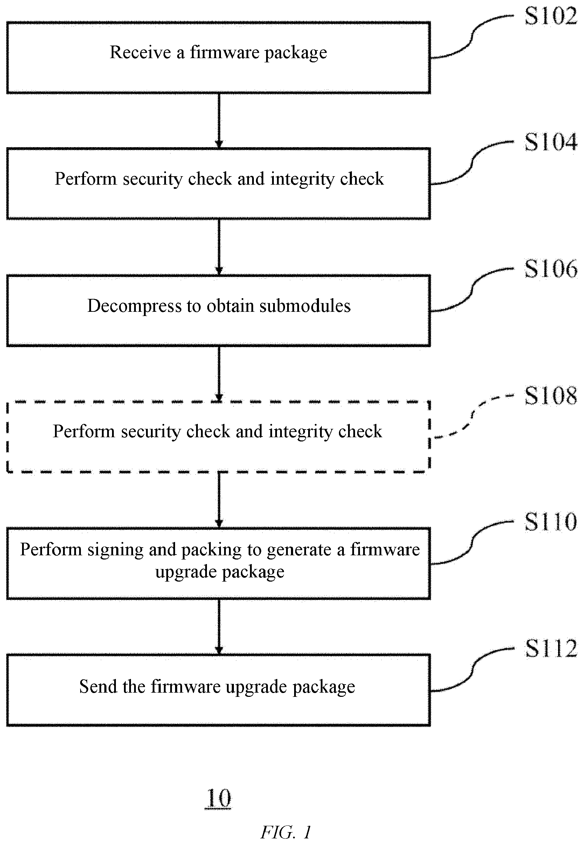

According to an aspect of the disclosure, a method for upgrading firmware of a vehicle infotainment system is provided. As shown in FIG. 1, the method 10 for upgrading firmware of a vehicle infotainment system (hereinafter briefly referred to as the method 10) includes the following steps performed by a mobile terminal: step S102: receiving a firmware package from a server; step S104: performing first security check and first integrity check (briefly denoted as "security check and integrity check" in the figure) on the firmware package; and step S106: if the firmware package passes the first security check and the first integrity check, decompressing the firmware package to obtain a firmware data packet including a plurality of submodules (briefly denoted as "decompress to obtain submodules" in the figure). As optional steps, the method 10 may include step S108: performing second security check and second integrity check on each of the plurality of submodules (briefly denoted as "security check and integrity check" in the figure); step S 110: if the plurality of submodules pass the second security check and the second integrity check (if step S108 is performed), performing packing and signing on the plurality of submodules to generate a firmware upgrade package (briefly denoted as "perform signing and packing to generate a firmware upgrade package" in the figure); and step S 112: sending the firmware upgrade package to a vehicle infotainment system for upgrading. In this manner, the vehicle infotainment system may receive an upgrade package pre-processed by the mobile terminal, thereby reducing processing overheads consumed when the vehicle infotainment system directly receives an upgrade package from the server.

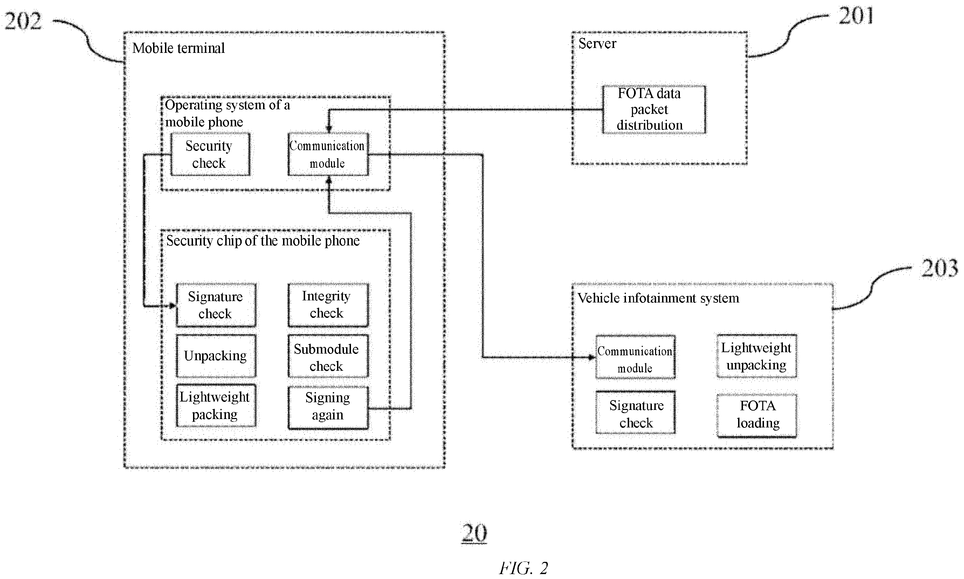

For the convenience of description, an example method 10 in the disclosure will be described below in conjunction with a system 20 for upgrading firmware of a vehicle infotainment system (hereinafter briefly referred to as a system 20) shown in FIG. 2. Those skilled in the art may predict that the method 10 is implemented not necessarily depending on the system 20 shown in FIG. 2. As shown in FIG. 2, the system 20 includes a server 201, a mobile terminal 202, and a vehicle infotainment system 203.

The vehicle infotainment system 203 may include general-purpose or special-purpose software and hardware, and can provide an interface for an external device (for example, the mobile terminal 202), so that function complementation is implemented. For example, the mobile terminal 202 may access the vehicle infotainment system 203, so that a function of the mobile terminal 202 is controlled in the vehicle infotainment system 203. For example, the mobile terminal 202 may be a smart phone. In some scenarios, the vehicle infotainment system 203 can control and use the mobile terminal 202 to make a call and play music. In this case, the vehicle infotainment system 203 may serve as an audio output device of the mobile terminal 202. The mobile terminal 202 may alternatively be a portable device in another form, for example, a smart PDA, a notebook computer, and a tablet computer.

However, the vehicle infotainment system 203 is usually in a running state when a user uses a vehicle. If the vehicle infotainment system 203 is upgraded in use, necessary services in the vehicle infotainment system 203 stop. Different from the vehicle infotainment system 203, the mobile terminal 202 is usually carried by the user and can provide a large quantity of idle resources such as computing power when not being used. Therefore, the large quantity of idle resources of the mobile terminal 202 can be used to assist in upgrading the vehicle infotainment system 203, so that services in the vehicle infotainment system 203 are less likely to stop.

The method 10 includes step S 102: receiving a firmware package from the server 201. Typically, in order to reduce consumption of traffic flow for downloading, firmware for upgrading the vehicle infotainment system 203 is highly compressed, so that a decompression process is time-consuming. The mobile terminal 202 described herein is used to receive the firmware package and can perform decompression and other operations on the received firmware package when the mobile terminal 202 is in an idle state, so that resources of the vehicle infotainment system 203 are not occupied by the time-consuming process.

In some embodiments of the disclosure, before step S102, the method 10 may further determine a state of the mobile terminal 202, and receive the firmware package only when the state allows. Specifically, the method 10 further includes the following steps (not shown in FIG. 1): the mobile terminal 202 may determine a state of the mobile terminal; and if the state of the mobile terminal 202 satisfies a predetermined state, a communication module of the mobile terminal 202 may send, to the server 201, a request to receive the firmware package. The state of the mobile terminal 202 is predetermined, thereby avoiding poor impact on the mobile terminal 202 during implementation of all the steps of the method 10, for example, excessive occupation of the resources of the mobile terminal 202. In some embodiments of the disclosure, the predetermined state may be that the mobile terminal 202 is in an idle state (for example, no foreground or background task is executed), the mobile terminal 202 is located in coverage of a wireless local area network (for example, in a home Wi-Fi network), and a battery level of the mobile terminal 202 is greater than a predetermined value (for example, the battery level is greater than or equal to 80%).

The method 10 includes step S 104: performing first security check and first integrity check (briefly denoted as "security check and integrity check" in the figure) on the firmware package. The "first" security check and the "first" integrity check herein are relative to the "second" security check and the "second" integrity check in step S 110 only for distinguishing checked objects, and check means may be the same or similar. A security check process is performed by using an operating system of the mobile terminal 202 based on a security check module of the operating system.

In some embodiments of the disclosure, the first security check may be performed in a security chip (for example, a security chip of a mobile phone) of the mobile terminal 202. In some embodiments of the disclosure, the security chip is a trusted execution environment (TEE) chip or a secure element (SE) chip. In some embodiments of the disclosure, the first security check is performed based on a public key received from the server 201 in advance (prior to the method 10). In addition, the first integrity check may be performed based on a hash value. In this manner, in step S 104, whether a FOTA data packet is signed and issued by the FOTA server 201 may be checked based on a public key certificate that is built in the security chip and that is downloaded from the server 201. This process is also referred to as "signature check". Then, integrity of the FOTA data packet may be checked, and whether a hash value of the data packet is consistent with that displayed on the server 201 is determined.

A TEE technology is a security technology based on hardware isolation, has a security principle like a safe deposit box in a bank, and provides an isolated security environment for data and private information. TEE provides an independent region for code execution at a chip layer. The independent region is unavailable for other programs at a software and hardware layer. Therefore, confidence and security of code executed in the region are ensured, a more secure place is provided for code execution and data storage, and confidence and tamper resistance of code and data are ensured. In addition, in order to prevent external malicious parsing and attacking and protect data security, an encryption/decryption logic circuit is disposed in the SE chip. An SE technology is originally used in IC chips in smart cards, but also implements a same function in chips such as UICC (a SIM specification) and SD in a mobile phone. A data processing solution based on the TEE technology and the SE technology has high confidence and can ensure data security. The TEE technology and the SE technology may be used independently or jointly.

The method 10 includes step S106: if the firmware package passes the first security check and the first integrity check, decompressing the firmware package to obtain a firmware data packet (briefly denoted as "decompress to obtain submodules" in the figure), where the firmware data packet may include a plurality of submodules. When the two checks (security check and integrity check) in step S 104 are both passed, the FOTA data packet may be decompressed (or referred to as unpacked) in step S106. As described above, in order to reduce consumption of traffic flow in a current phase, the FOTA data packet is usually compressed at a high intensity. A decompressing process is time-consuming. It takes a large amount of time to decompress in the vehicle infotainment system 203. After decompression is completed on the mobile terminal 202, each submodule may be decompressed from the original entire FOTA data packet. The submodules are repacked, so that decompression burdens on the vehicle infotainment system 203 can be eliminated.

The method 10 includes step S108: performing second security check and second integrity check on each of the plurality of submodules (briefly denoted as "security check and integrity check" in the figure). In step S108, the security check and the integrity check may be performed on each submodule. In addition, for a check manner, reference may be made to the first security check and the first integrity check in step S104. Specifically, in some embodiments of the disclosure, the second security check is performed in a security chip of the mobile terminal 202. The security chip is a TEE chip or an SE chip. In addition, the second security check is performed based on a public key received from the server 201. In some embodiments of the disclosure, the second integrity check is performed based on a hash value. Certainly, in some examples, step S 108 may alternatively be omitted. Instead, the decompressed submodules are directly packed and signed.

Typically, check of the submodules is also quite time-consuming. In order to reduce time consumption, a conventional solution does not have a process of checking each submodule. In the disclosure, a submodule check step is added to further enhance security. This process may be performed when the mobile terminal 202 is in an idle state, and therefore does not interfere with regular services of the mobile terminal 202.

The method 10 includes step S 110: if the plurality of submodules pass the second security check and the second integrity check (if step S108 is performed, or directly performing packing and signing if step S 108 is not performed), performing packing and signing on the plurality of submodules to generate a firmware upgrade package (briefly denoted as "perform signing and packing to generate a firmware upgrade package" in the figure). After the necessary checks in step S 108 are completed, files of the submodules may be repacked and signed again by using the security chip of the mobile terminal 202. Because subsequent transmission is directly performed through an interface of the mobile terminal 202 without going through an external network, there is no particular requirement for the size of the data packet. In this case, the packing method may be non-compression. This non-compression packing method is also referred to as a light-weight packing method. The non-compression method may save much decompressing time for the vehicle infotainment system 203. In step S 110, signing is further performed on the generated upgrade package. The signing may be performed based on a private key certificate built in the security chip. Information of the certification has been exchanged with the vehicle infotainment system 203 in advance.

The method 10 includes step S 112: sending the firmware upgrade package to the vehicle infotainment system 203 for upgrading. The signed package is sent to the communication module of the mobile terminal 202. The communication module of the mobile terminal 202 is then sent to a communication module of the vehicle infotainment system 203 through a cable or a data interface.

The above data interface may be a general-purpose USB interface, for example, a small USB Type-C interface. The mobile terminal 202 and the vehicle infotainment system 203 may exchange data through the interface. Exchanged content is not limited to the firmware upgrade package provided in the disclosure, and may alternatively be another audio or video content or the like. In addition, the mobile terminal 202 may also be powered through the interface, thereby ensuring that electricity of the mobile terminal 202 can support the exchange process of the mobile terminal 202 and the vehicle infotainment system 203.

In some embodiments of the disclosure, the method 10 further includes the following steps (not shown in FIG. 1) performed by the vehicle infotainment system 203: receiving the firmware upgrade package by using the communication module of the vehicle infotainment system 203; performing signature check on the firmware upgrade package based on the private key certificate received from the mobile terminal 202; performing unpacking (lightweight unpacking) on the checked firmware upgrade package to obtain an upgrade file; and upgrading firmware of the vehicle infotainment system 203 based on the upgrade file. The side of the vehicle infotainment system 203 performs rapid signature check and rapid (lightweight) unpacking after receiving the processed FOTA data packet. In comparison with a conventional FOTA solution, the method described herein shortens the time spent on downloading a data packet and on decompressing a highly-compressed package, and can also enhance security through the twice checks of the submodules. Thus, the vehicle infotainment system 203 may complete loading of the FOTA data packet and the subsequent firmware upgrade in an efficient and secured way.

According to another aspect of the disclosure, a computer-readable storage medium having instructions stored therein is provided. The instructions, when executed by a processor, cause the processor to perform any one of the methods for upgrading firmware of a vehicle infotainment system described above. The computer-readable medium in the disclosure includes various types of computer storage media, and may be any usable medium accessible to a general-purpose or special-purpose computer. For example, the computer-readable medium may include a RAM, a ROM, an EPROM, an E²PROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. Data is usually copied magnetically in a disk used herein, while data is usually copied optically by using lasers in a disc. A combination thereof shall also fall within the scope of protection of the computer-readable media. An exemplary storage medium is coupled to a processor, so that the processor can read information from and write information to the storage medium. In an alternative solution, the storage medium may be integrated into the processor. The processor and the storage medium may reside in an ASIC. The ASIC may reside in a user terminal. In an alternative solution, the processor and the storage medium may reside as discrete assemblies in a user terminal.

According to another aspect of the disclosure, a mobile terminal is provided. The mobile terminal includes: a memory configured to: store instructions; and a processor configured to: execute the instructions to perform the following operations: receiving a firmware package from a server; performing first security check and first integrity check on the firmware package; if the firmware package passes the first security check and the first integrity check, decompressing the firmware package to obtain a firmware data packet, where the firmware data packet includes a plurality of submodules; performing second security check and second integrity check on each of the plurality of submodules (optional step); if the plurality of submodules pass the second security check and the second integrity check (if the above optional step is performed), performing packing and signing on the plurality of submodules to generate a firmware upgrade package; and sending the firmware upgrade package to a vehicle infotainment system for upgrading.

The mobile terminal may have a general-purpose or special-purpose processor chip, and may, for example, be a general-purpose ARM architecture. In addition, various services of the mobile terminal may be carried on an operating system, thereby facilitating execution of the various services or specific operations. For the above specific execution process of the mobile terminal, reference may be made to related steps of the method 10 for upgrading firmware of a vehicle infotainment system described above. Related content is also described herein. Details are not described herein again in the specification.

According to another aspect of the disclosure, a vehicle infotainment system is provided. The vehicle infotainment system includes: a memory configured to: store instructions; and a processor configured to: execute the instructions to perform the following operations: receiving a firmware upgrade package from a mobile terminal; performing signature check on the firmware upgrade package based on a private key certificate received from the mobile terminal; performing unpacking on the checked firmware upgrade package to obtain an upgrade file; and upgrading firmware of the vehicle infotainment system based on the upgrade file.

The vehicle infotainment system may have a general-purpose or special-purpose processor chip, and may, for example, be a general-purpose ARM architecture. In addition, various services of the vehicle infotainment system may be carried on an operating system, thereby facilitating execution of the various services or specific operations. For the above specific execution process of the vehicle infotainment system, reference may be made to related steps of the method 10 for upgrading firmware of a vehicle infotainment system described above. Related content is also described herein. Details are not described herein again in the specification.

Considering increasingly frequent interaction between a smart phone of a user and a vehicle infotainment system of a smart vehicle in future, a safe and efficient FOTA system provided in some embodiments of the disclosure rapidly downloads a vehicle FOTA data packet via a home Wi-Fi network by using a mobile phone of the user when the mobile phone is in an idle state, performs security check and decompression on the FOTA data packet by using a security chip of the mobile phone, and finally transmits the final downloaded and checked FOTA data packet to the vehicle infotainment system for rapid FOTA, thereby solving efficiency and security problems of the FOTA of the vehicle infotainment system of the smart vehicle.

The foregoing descriptions are merely the embodiments of the disclosure, but are not intended to limit the scope of protection of the disclosure. Any feasible variation or replacement conceived by those skilled in the art within the technical scope disclosed in the disclosure shall fall within the scope of protection of the disclosure. Without conflicts, the embodiments of the disclosure and features in the embodiments may also be combined with each other. The scope of protection of the disclosure shall be subject to recitations of the claims.

## Claims

1. A method for upgrading firmware of a vehicle infotainment system, wherein the method comprises:
receiving, by a mobile terminal, a firmware package from a server;
performing, by the mobile terminal, first security check and first integrity check on the firmware package;
decompressing the firmware package to obtain a firmware data packet, wherein the firmware data packet comprises a plurality of submodules;
performing, by the mobile terminal, packing and signing on the plurality of submodules to generate a firmware upgrade package; and
sending, by the mobile terminal, the generated firmware upgrade package to a vehicle infotainment system for upgrading.

2. The method according to claim 1, further comprising:
performing second security check and second integrity check on each of the plurality of submodules.

3. The method according to claim 1 or 2, further comprising:
determining, by the mobile terminal, a state of the mobile terminal; and
sending, to the server, a request to receive the firmware package.

4. The method according to claim 3, wherein the predetermined state comprises the mobile terminal is in an idle state, the mobile terminal is located in coverage of a wireless local area network, a battery level of the mobile terminal is greater than a predetermined value, or any combination thereof.

5. The method according to any one of claims 2 to 4, wherein the first security check and the second security check are performed in a security chip of the mobile terminal.

6. The method according to claim 5, wherein the security chip is a trusted execution environment TEE chip or a secure element SE chip.

7. The method according to claim 5 or 6, wherein the first security check and the second security check are performed based on a public key received from the server.

8. The method according to any one of claims 2 to 7, wherein the first integrity check and the second integrity check are performed based on a hash value.

9. The method according to any one of claims 2 to 8, wherein the performing, by the mobile terminal, packing and signing on the plurality of submodules to generate a firmware upgrade package comprises:
performing the signing by a security chip of the mobile terminal based on a built-in private key certificate; and
sending the private key certificate to the vehicle infotainment system.

10. The method according to claim 9, further comprising:
receiving, by the vehicle infotainment system, the firmware upgrade package;
performing, by the vehicle infotainment system, signature check on the firmware upgrade package based on the private key certificate;
performing, by the vehicle infotainment system, unpacking on the checked firmware upgrade package to obtain an upgrade file; and
upgrading, by the vehicle infotainment system, firmware of the vehicle infotainment system based on the upgrade file.

11. A computer-readable storage medium having instructions stored therein, wherein the instructions, when executed by a processor, cause the processor to perform the method according to any one of claims 1 to 10.

12. A mobile terminal, wherein the mobile terminal comprises:
a memory configured to store instructions; and
a processor configured to execute the instructions and cause the mobile terminal to:
receive a firmware package from a server;
perform first security check and first integrity check on the firmware package;
decompress the firmware package to obtain a firmware data packet, wherein the firmware data packet comprises a plurality of submodules;
perform packing and signing on the plurality of submodules to generate a firmware upgrade package; and
send the firmware upgrade package to a vehicle infotainment system for upgrading.

13. A vehicle infotainment system, wherein the vehicle infotainment system comprises:
a memory configured to store instructions; and
a processor configured to execute the instructions and cause the vehicle infotainment system to:
receive a firmware upgrade package from a mobile terminal;
perform signature check on the firmware upgrade package based on a private key certificate received from the mobile terminal;
perform unpacking on the checked firmware upgrade package to obtain an upgrade file; and
upgrade firmware of the vehicle infotainment system based on the upgrade file.
